# EUROPÄISCHE PATENTANMELDUNG

(11) **EP 1 149 731 A2**
(43) Veröffentlichungstag der Anmeldung: **31.10.2001**
(21) Anmeldenummer: 01109901.7
(22) Anmeldetag: 24.04.2001
(51) Int. Cl.: B60Q 1/076, F21V 14/04

(54) **Scheinwerfer für Fahrzeuge**

(30) Priorität: 28.04.2000 DE 10021040
(71) Anmelder: Hella KG Hueck & Co., 59552 Lippstadt (DE)
(72) Erfinder: Brummel, Reinhold, 59609 Anröchte (DE); Korff, Detlef, 59557 Lippstadt (DE); Knoche, Matthias, 59597 Bad Westernkotten (DE); Börnchen, Thomas, 96052 Bamberg (DE); Plotzitzka, Jörg, 59558 Lippstadt (DE)

(57) **Zusammenfassung**

Die Erfindung betrifft einen Scheinwerfer (1) für Fahrzeuge mit einem Reflektor (2), mit einer in einem zentralen Bereich des Reflektors (2) angeordneten Lichtquelle (3) und mit einer Stelleinrichtung (4) zur Verstellung des Reflektors (2) um eine vertikale Verschwenkachse (12) relativ zu einem Halteteil (13) in eine vorgegebene Kurvenlicht-Betriebsposition, wobei der Reflektor (2) über ein starr mit demselben verbundenes, quer zu der vertikalen Verschwenkachse (12) abragendes Bogenelement (8) mit einer parallel zu der vertikalen Verschwenkachse (12) orientierten Welle der Stelleinrichtung(4) in Eingriff steht und wobei der Reflektor (2) durch Kopplung mittels eines vorgespannten Zentrierfederelementes (16) drehbar in Bezug zu dem Halteteil (13) gelagert ist.

## Beschreibung

Die Erfindung betrifft einen Scheinwerfer für Fahrzeuge mit einem Halteteil und einem um eine vertikale Verschwenkachse zu demselben verschwenkbaren Schwenkteil, das in einem zentralen Bereich ein Lichtelement aufweist.

Aus der DE 197 21 095 A1 ist ein Scheinwerfer für Fahrzeuge bekannt, der eine in vertikaler Richtung abragenden Drehwelle und über ein mit der Drehwelle fest verbundenes Schneckenrad mit einer horizontal antreibbaren Schnecke gekoppelt ist. Die Schnecke ist mit einem Motor verbunden, der durch eine Steuereinheit derart angesteuert wird, dass der Scheinwerfer eine gewünschte horizontale Ausrichtung zur Erzielung eines Kurvenlichtes erfährt. Nachteilig an dem bekannten Scheinwerfer ist, dass die aus der Drehwelle, dem Schneckenrad, der Schnecke und dem Motor gebildete Stelleinrichtung relativ voluminös ist. Da der gesamte Scheinwerfer verschwenkt werden muss, ist ein relativ großer Kraftaufwand erforderlich. Ferner ist nachteilig, dass bei Ausfall der elektrischen Ansteuerung der Scheinwerfer in der zuletzt eingenommenen Betriebsstellung verharrt.

Weiterhin ist es aus der DE 198 02 023 A1 bekannt, einen Scheinwerfer für Fahrzeuge mit einer Stelleinrichtung auszustatten, die ein lineares Stellelement aufweist, dass über ein Kugelgelenk mit einem Reflektor des Scheinwerfers gekoppelt ist, so dass ein Verschwenken desselben um eine vertikale Achse zur Erzielung eines Kurvenlichtes ermöglicht wird. Zwar ist durch die Kopplung des Stellelementes lediglich mit dem Reflektor ein geringerer Kraftaufwand zum Verschwenken erforderlich. Gleichwohl können durch die Kopplung des linearen Stellelementes mit dem Reflektor über ein Kugelgelenk Toleranzfehler auftreten, die sich nachteilig auf die Genauigkeit der vorgegebenen Schwenkstellung des Reflektors auswirken. Nachteilig an dem bekannten Scheinwerfer ist ferner, dass bei Ausfall der Ansteuerelektronik der Reflektor in der zuletzt eingenommenen Betriebsposition verharrt.

Aufgabe der vorliegenden Erfindung ist es, einen Scheinwerfer für Fahrzeuge mit einer Basislichtfunktion und zusätzlichen Lichtfunktionen, wie z.B. Kurvenlicht-, Stadtlichtfunktion etc. derart weiterzubilden, dass bei geringem Bauraumbedarf eine sichere Einstellung einer Lichtfunktion gewährleistet ist.

Zur Lösung dieser Aufgabe ist der erfindungsgemäße Scheinwerfer in Verbindung mit dem Oberbegriff des Patentanspruchs 1 dadurch gekennzeichnet, dass dem Halteteil eine Stelleinrichtung mit einem Stellelement zugeordnet ist, das auf ein Koppelelement des Schwenkteils einwirkt zur Verstellung desselben um die Verschwenkachse, und dass eine Zentrierfedereinrichtung vorgesehen ist, derart, dass in einem Nichtbetriebszustand das Schwenkteil selbsttätig in eine vorgegebene Lage zurückbewegbar ist.

Der besondere Vorteil des erfindungsgemäßen Scheinwerfers besteht darin, dass zum einen durch die Stelleinrichtung und zum anderen durch die Zentrierfedereinrichtung eine zuverlässige und langzeitstabile Verstellung einer vorgegebenen Kurvenlicht-Betriebsposition ermöglicht wird. Insbesondere die Zentrierfedereinrichtung bewirkt, dass das Schwenkteil bei einer Störung oder im stromlosen Zustand der Stelleinrichtung stets in die vorgegebene Lage, insbesondere in die Nullage zurückbewegt wird.

Nach einer bevorzugten Ausführungsform der Erfindung ist die Stelleinrichtung als elektrische Stelleinrichtung ausgebildet, die dem Halteteil zugeordnet ist und mit einem Stellelement versehen ist, das in dem Betriebszustand in Eingriff mit einem Koppelelement des Schwenkteils steht. Vorteilhaft weisen sowohl das Stellelement als auch das Koppelelement jeweils eine Verzahnung auf, so dass ein vorgegebener Verschwenkwinkel sicher und zuverlässig eingestellt werden kann.

Nach einer besonders vorteilhaften Ausführungsform der Erfindung weist die Stelleinrichtung einen elektrischen Antriebsmotor auf, der mit dem Stellelement über eine elektromagnetische Kupplung verbunden ist. Im Nichtbetriebszustand ist die Kupplung gelöst, wobei das Stellelement aus der Eingriffsposition mit dem Koppelelement in eine Ausgriffsposition verschwenkt wird. Das Koppelelement ist nunmehr frei von dem Stellelement ausgeübten Kräften, so dass in Verbindung mit der Zentrierfedereinrichtung das Koppelelement und das starr mit demselben verbundene Schwenkteil in die Nullage bewegbar ist. Vorteilhaft kann hierdurch sicher eine zuverlässige Nullagenposition des Schwenkteils erzielt werden.

Nach einer Weiterbildung der Erfindung besteht die Zentrierfedereinrichtung aus zwei Zentrierfederelementen, die sich im wesentlichen senkrecht zu der Verschwenkachse auf gegenüberliegenden Seiten derselben zwischen dem Halteteil und dem Schwenkteil erstrecken. Dadurch, dass die Zentrierfederelemente unter Vorspannung montiert sind, kann die Federkennlinie relativ flach gewählt werden, so dass bei Ausschwenken bzw. Verschwenken des Schwenkteils eine geringe Rückstellkraftänderung eintritt. In einem vorgegebenen Winkelbereich von beispielsweise +/- 15° kann hierdurch eine um eine geringe Bandbreite differierende, relativ hohe Rückstellkraft bewirkt werden.

Der Vorteil einer weiteren bevorzugten Ausführungsform des Scheinwerfers besteht darin, dass durch die Ausbildung eines starr mit einem Reflektor verbundenen Bogenelementes eine direkte Kopplung mit einer Stelleinrichtung erzielt wird, wobei das Bogenelement unmittelbar mit einer Antriebswelle eines Elektromotors der Stelleinrichtung verbunden sein kann. Dadurch, dass der Reflektor zum einen über das Bogenelement unmittelbar mit der Antriebswelle der Stelleinrichtung und zum anderen über ein vorgespanntes Zentrierfederelement drehbar zu einem Halteteil angeordnet ist, wird eine spielfreie Verstellung des Reflektors ermöglicht, wobei sich die hohe Steifigkeit und die relativ geringe Anzahl der beweglichen Bauteile des Scheinwerfers günstig auf die Langzeitstabilität auswirken. Dem vorgespannten Zentrierfederelement kommt eine Doppelfunktion zu. Zum einen unterstützt es die verschwenkbar Lagerung des Reflektors bezüglich des Halteteils. Zum anderen ermöglicht es bei Ausfall der elektrischen Versorgung der Stelleinrichtung die selbsttätige Verschwenkung des Reflektors in eine zentrale Ausgangsposition.

Nach einer besonderen Ausführungsform der Erfindung erstreckt sich das Bogenelement sektor- oder fächerförmig von einem zentralen Bereich in Lichtaustrittsrichtung des Scheinwerfers. Dabei bildet ein auf einer der Verschwenkachse abgewandten Seite angeordneter Bogenrand eine Verzahnung, die einen konstanten Radius zu der Verschwenkachse aufweist. Das Bogenelement ist nach Art eines Zahnradsegmentes ausgestaltet und verläuft vorzugsweise in einem unteren vorderen Bereich des Scheinwerfers, so das der ohnehin vorhandene und üblicherweise nicht genutzte Bauraum des Scheinwerfers ausgefüllt wird. Durch den relativ großen Abstand des Bogenrandes zu der Verschwenkachse kann ein relativ hohes Untersetzungsverhältnis gebildet werden.

Nach einer Weiterbildung der Erfindung ist das Zentrierfederelement als sich quer zur Verschwenkachse erstreckende Blattfeder ausgebildet, die zwischen zwei vertikal verlaufenden Andruckstegen des Halteteils verläuft. Die Blattfeder hat bezüglich des Auslenkwinkels einen degressiven Verlauf des Rückstellmomentes. Der Verlauf des Drehmomentes ist bis zu einem Auslenkwinkel von 20 bzw. 30 Grad relativ steil, so dass einfach eine definierte Kurvenlicht-Betriebsposition einstellbar ist. Ferner wird dadurch bei Ausfall bzw. Abschaltung der Antriebseinheit eine sichere Rückstellung des Reflektors in die zentrale Mittellage gewährleistet.

Nach einer Weiterbildung der Erfindung weist die Antriebseinheit einen Schrittmotor auf, dessen Welle unmittelbar mit der Verzahnung des Bogenrades des Bogenelementes in Eingriff steht. Vorteilhaft wird hierdurch eine einfache Ansteuerung von Zwischenpositionen der Kurvenlichtfunktion bewirkt. Anschläge für die Endlagen des Bogenelementes fallen weg.

Nach einer Weiterbildung der Erfindung ist die Lichtquelle an einem Lichttragteil gehalten, das um eine horizontale Achse verschwenkbar zu dem Halteteil angeordnet ist. Diese horizontale Achse ist orthogonal zu der vertikalen Schwenkachse angeordnet und bildet mit ihr zusammen eine vertikale Ebene. Es wird somit eine kardanische Lagerung des Lichttragteils gebildet, wobei platzsparend mehrere unterschiedliche Lichtfunktionen durch Verschwenken um zwei in einer gemeinsamen Ebene verlaufenden Achsen erzeugt werden können.

Nach einer Weiterbildung der Erfindung ist das Lichttragteil derart über ein Koppelelement mit einem axial beweglichen Stellstift einer zweiten Stelleinrichtung gekoppelt, so dass in zwei Betriebsstellungen jeweils Enden des Koppelelementes mit der vertikalen Schwenkachse eine gemeinsame Vertikalebene bilden. Auf diese Weise wird eine Entkopplung der Verstellung der Kurvenlichtfunktion einerseits und der Verstellung von zwei weiteren Lichtfunktionen (Abblendlicht-/Fernlichtfunktion) andererseits geschaffen.

Vorzugsweise mit Vorsehen einer vorgespannten Feder einerseits, die mit dem Lichttragteil verbunden ist, und einer gelenkigen Kopplung des Koppelelementes mit dem Stellstift andererseits wird gewährleistet, dass sich das Lichttragteil stets in einer vorgegebenen Endposition befindet zur Bildung einer Abblendlicht- oder Fernlichtfunktion. Dadurch, dass sich die Enden des Koppelelementes in den jeweiligen Betriebsstellungen stets mit der vertikalen Schwenkachse in einer Ebene befinden, ist die durch die vorgespannte Feder bewirkte Haltekraft unabhängig von der Einstellung der Kurvenlichtfunktion konstant. Durch die gelenkige Lagerung der dem Stellstift zugewandten Seite des Koppelelementes bleibt der Verstellwinkel bei der Kurvenlichtfunktionseinstellung konstant, so dass die eingestellte Kurvenlicht-Betriebsposition bei Verstellung von der Abblendlichtfunktion in die Fernlichtfunktion oder umgekehrt nicht geändert wird.

Zur eindeutigen Festlegung der Abblendlicht- und Fernlichtfunktion weisen das Reflektortragteil und/oder das Lichttragteil Anschläge auf, so dass in den jeweiligen Betriebspositionen die Tragteile unmittelbar aneinanderliegen. In Verbindung mit der linear wirksamen Stelleinrichtung kann somit eine einfache Endlagen-Betriebsstellung erzielt werden.

Ausführungsbeispiele der Erfindung werden nachfolgend anhand der Zeichnungen erläutert.

Es zeigen:
- Figur 1: eine perspektivische Vorderansicht eines Scheinwerfers,

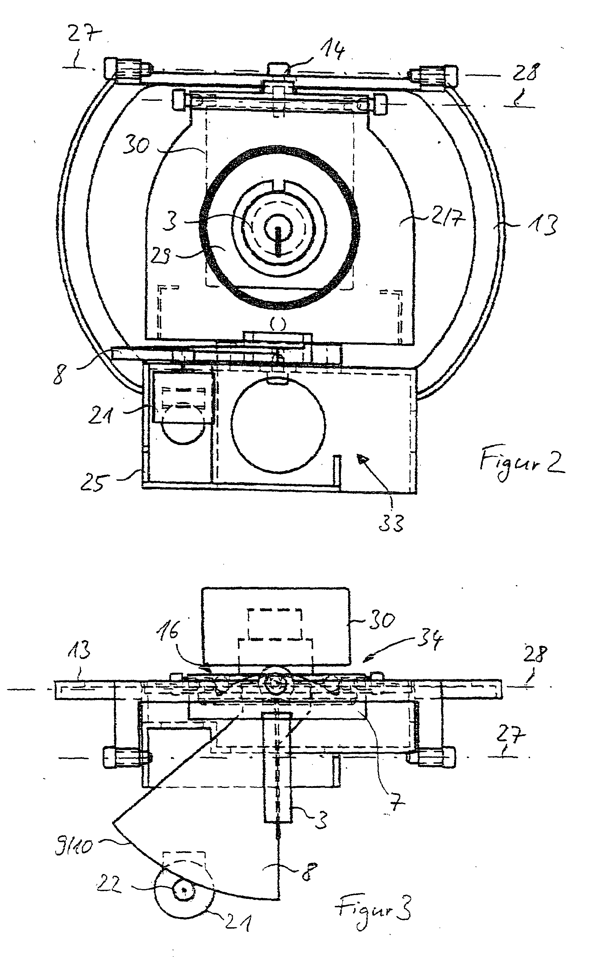

- Figur 2: eine schematische Vorderansicht des Scheinwerfers,
- Figur 3: eine schematische Draufsicht des Scheinwerfers,
- Figur 4: eine Seitenansicht des Scheinwerfers,
- Figur 5a: eine schematische Draufsicht auf die Kopplung eines Reflektortrag- teils mittels eines Zentrierfederelementes an einem Halteteil des Scheinwerfers in einer zentralen Mittellage des Reflektortragteils,
- Figur 5b: eine schematische Draufsicht auf die Kopplung eines Reflektortrag- teils mittels eines Zentrierfederelementes an einem Halteteil des Scheinwerfers in einer nach rechts um 20 Grad verschwenkten Lage des Reflektortragteils,
- Figur 6a: eine schematische Darstellung der Ankopplung eines Stellstiftes an ein vorgespanntes Federelement eines Lichttragteils des Scheinwer- fers in einer Einfahrposition (Abblendlichtfunktion),
- Figur 6b: eine schematische Darstellung der Ankopplung eines Stelltstiftes an ein vorgespanntes Federelement des Lichttragteils des Scheinwer- fers in Ausfahrposition (Fernlichtfunktion),
- Figur 7: eine perspektivische Darstellung eines Scheinwerfers nach einem zweiten Ausführungsbeispiel,
- Figur 8: eine perspektivische Darstellung des Scheinwerfer gemäß zweiten Ausführungsbeispiel von einer Rückseite her,
- Figur 9: eine Draufsicht auf den Scheinwerfer gemäß zweiten Ausführungs- beispiel,
- Figur 10: eine schematische Darstellung der Kopplung eines Halteteils und eines Schwenkteils des Scheinwerfers nach einem weiteren Ausfüh- rungsbeispiel,
- Figur 11: eine Draufsicht auf ein mit einem Koppelelement des Schwenkteils in Eingriff stehenden Stellelementes einer Stelleinrichtung, die mit dem Halteteil starr verbunden ist,
- Figur 12: eine schematische Darstellung des Stellelementes und des Koppel- elementes in einer Nichteingriffsstellung,
- Figur 13: eine Draufsicht auf eine Zentrierfedereinrichtung, die mit dem Halte- teil und dem Schwenkteil eines Scheinwerfers verbunden ist und
- Figur 14: eine Federkennlinie der Zentrierfedereinrichtung.

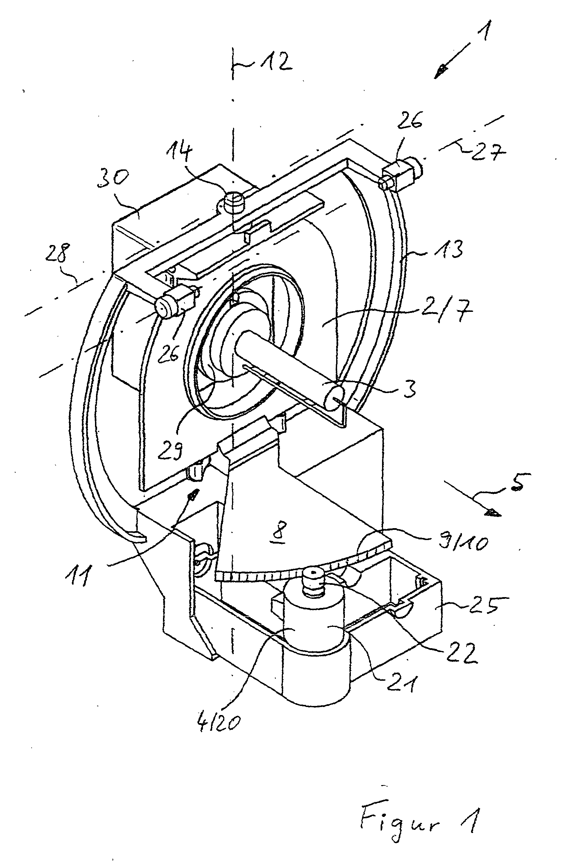

Figur 1 zeigt einen Scheinwerfer 1 für Fahrzeuge, der im wesentlichen einen Reflektor 2, eine Lichtquelle 3 und eine Stelleinrichtung 4 umfasst.

Der Reflektor weist ein in Abstrahlrichtung 5 orientiertes Reflektorelement 6 mit spiegelnden Innenflächen auf, das an einem Schwenkteil bzw. an einem Reflektortragteil 7 gehalten ist. Das Reflektortragteil 7 ist rahmenartig ausgebildet und weist eine Öffnung auf zum Durchtritt der Lichtquelle 3 in einem zentralen Bereich desselben. Auf einer zu einer nicht dargestellten Abdeckscheibe des Scheinwerfers 1 zugewandten Seite des Reflektortragteils 7 schließt sich starr ein Bogenelement 8 an, das fächerförmig ausgebildet ist und einen kurvenförmigen Bogenrand 9 mit einer Verzahnung 10 aufweist, der sich entfernt von einem zentralen Bereich 11, in dem das Reflektortragteil 7 angeordnet ist, erstreckt.

Der Bogenrand 9 erstreckt sich mit einem konstanten Radius um eine vertikale Verschwenkachse 12, um die das Reflektortragteil 7 verschwenkbar gegenüber einem rahmenartigen Halteteil 13 gelagert ist. Zu diesem Zweck ist das Reflektortragteil 7 in einem oberen Bereich über ein Gelenk 14 gelenkig mit dem Halteteil 13 verbunden. In einem unteren Bereich weist das Reflektortragteil 7 einen Reflektorfortsatz 15 auf, der über ein vorgespanntes Zentrierfederelement 16 drehbar zu dem Halteteil 13 gelagert ist.

Das Zentrierfederelement 16 ist als sich quer zu der Verschwenkachse 12 erstreckende Blattfeder ausgebildet, wobei Enden 17 derselben verbogen an Andruckstegen 18 des Halteteils 13 umgelenkt sind. Wie besser aus Figur 5a ersichtlich ist, liegen die Enden 17 in einer zentralen Ausgangsstellung des Reflektortragteils 7 bzw. des Reflektorfortsatzes 15 unmittelbar an Anschlägen 19 der Andruckstege 18 an.

Zur Erzeugung einer Kurvenlichtfunktion wird der Reflektor 2 um die Verschwenkachse 12 mittels der Stelleinrichtung 4 in eine gewünschte Betriebsposition verschwenkt. Zu diesem Zweck steht eine Antriebseinheit 20 der Stelleinrichtung 4 unmittelbar in Eingriff mit dem Bogenrand 9 des Bogenelementes 8.

Die Antriebseinheit 20 weist einen aufrecht stehenden Schrittmotor 21 mit einer Antriebswelle 22 auf, die parallel zu der Verschwenkachse 12 orientiert ist. Die Antriebswelle 22 greift in die Verzahnung 10 des Bogenrandes 9 ein.

Durch Ansteuerung der Antriebseinheit 20 wird das Bogenelement 8 um die Verschwenkachse 12 in eine gewünschte Position verdreht, wobei gleichzeitig ein Verschwenken des Reflektorfortsatzes 15 eintritt, siehe Figur 5b. Der Reflektorfortsatz 15 weist einen mittleren Bogenabschnitt 23 mit einem großen Radius und sich zu beiden Seiten anschließende äußerer Bogenabschnitte 24 mit einem kleinen Radius auf. Der mittlere Bogenabschnitt 23 ist im Wesentlichen koaxial zu der Verschwenkachse 12 orientiert. Die hintere Kontur des Reflektorfortsatzes 15 bewirkt, dass das Reflektortragteil 7 stets zwischen der Antriebswelle 22 des Schrittmotors 21 und der Blattfeder 16 des Halteteils 13 verliersicher eingespannt ist.

Die Antriebseinheit 20 ist feststehend in einem Gehäuse 25 der Stelleinrichtung 4 gelagert, das starr mit dem Halteteil 13 verbunden ist. Das Halteteil 13 ist über Gelenke 26 bezüglich eines nicht dargestellten Gehäuses des Scheinwerfers 1 um eine horizontale Achse 27 verschwenkbar gelagert, so dass mittels einer nicht dargestellten, auf der Rückseite des Halteteils 13 angeordneten Leuchtweitenstelleinrichtung die Neigung des Scheinwerfers 1 verstellt werden kann.

Der horizontalen Achse 27 ist eine weitere horizontale Achse 28 nachgelagert, um die ein Lichttragteil 29 bezüglich des Reflektortragteils 7 schwenkbar gelagert ist. Das Lichttragteil 29 trägt die Lichtquelle 3, die als Gasentladungslampe ausgebildet ist, und ist auf einer Rückseite mit einem Zündmodul 30 der Gasentladungslampe 3 verbunden. Das Lichttragteil 29 ist über ein Koppelelement 31 mit einem axial beweglichen Stellstift 32 einer zweiten Stelleinrichtung 33 verbunden. Die zweite Stelleinrichtung 33 weist einen nicht dargestellten Elektromotor auf, der über ein Getriebe mit dem Stellstift 32 gekoppelt ist. Die so gebildete zweite Stelleinrichtung 32 kann mit der ersten Stelleinrichtung 4 in einem gemeinsamen Gehäuse 25 gelagert sein.

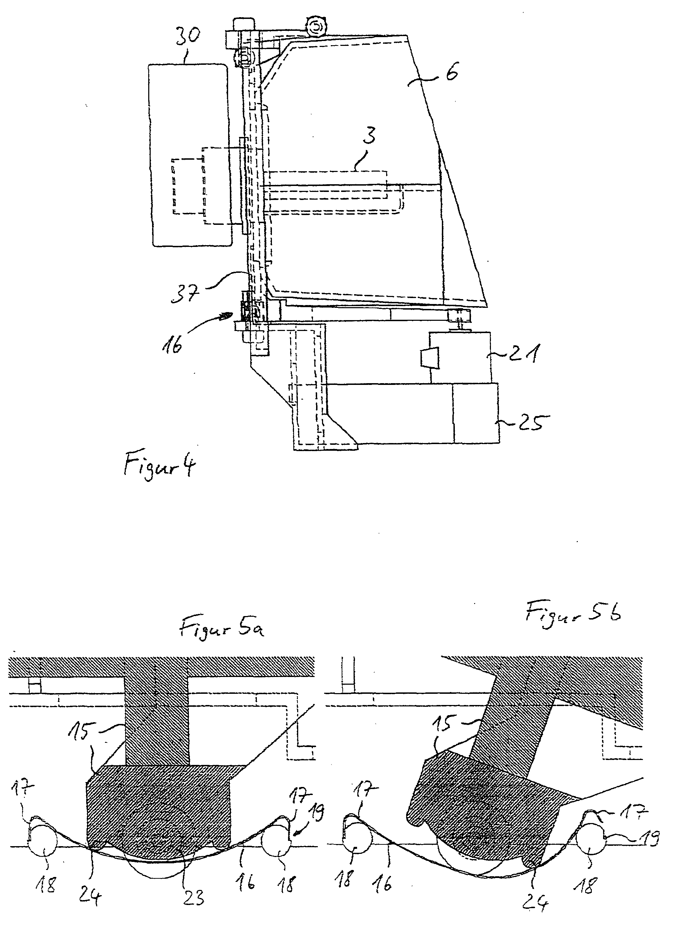

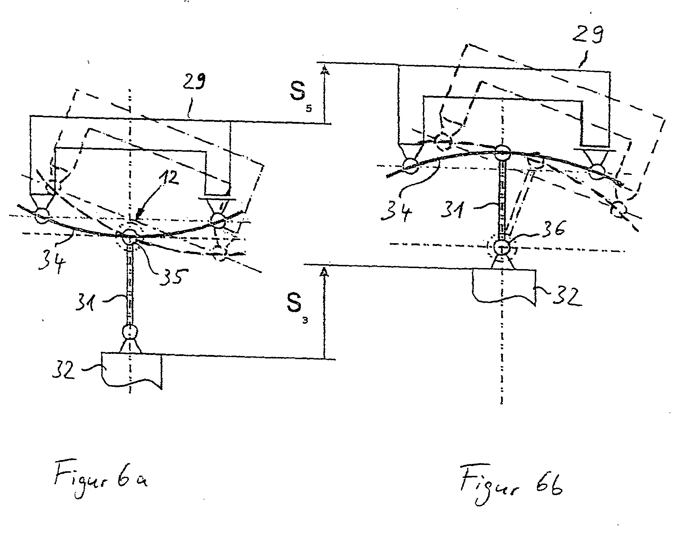

Durch Betätigen der zweiten Stelleinrichtung 33 wird das Lichttragteil 29 in zwei Endstellungen verschwenkt, wobei in einer ersten Betriebsstellung gemäß Figur 6a der Scheinwerfer eine Abblendlichtfunktion und in einer zweiten Betriebsstellung gemäß Figur Sb der Scheinwerfer 1 eine Fernlichtfunktion einnimmt. Wie aus der Abblendlichtstellung gemäß Figur 4 zu ersehen ist, ist die Lichtquelle 3 in der Fernlicht-Betriebsstellung um die horizontale Achse 28 geneigt nach unten angeordnet. Das Lichttragteil 29 ist über ein vorgespanntes Federelement 34 mit dem Koppelelement 31 verbunden, wobei das Federelement 34 streifenförmig ausgebildet und sich im Wesentlichen verbogen in horizontaler Richtung erstreckt. Dabei ist das Federelement 34 in einer nicht dargestellten Aufnahme des Koppelelementes 31 gehalten und berührt dasselbe entlang einer vertikalen Linie.

Wie aus Figur 6a zu ersehen ist, befindet sich der Stellstift 32 in der Abblendlicht-8etriebsstellung in einer Einfahrposition, wobei ein dem Federelement 34 zugewandtes Ende 35 des Koppelelementes 31 zusammen mit der vertikalen Verschwenkachse 12 in einer gemeinsamen Vertikalebene verläuft. Auf diese Weise ist die Durchbiegung des Federelementes 34 unabhängig von der eingestellten Kurvenlichtfunktion des Reflektors 2. Bei Verschwenken des Reflektortragteils 7 um die vertikale Verschwenkachse 12 verharrt das Ende 35 stets in der gleichen Position.

Auch in einer Fernlicht-8etriebsstellung gemäß Figur 6b kann der Scheinwerfer 1 eine beliebige Kurvenlicht-8etriebsstellung einnehmen, ohne das die eingestellte Fernlicht-8etriebsstellung beeinflusst wird. Zu diesem Zweck wird der Stellstift 32 in eine solche Ausfahrposition verstellt, dass ein dem Stellstift 32 zugewandtes Ende 36 des Koppelelementes 31 in der Fernlicht-Betriebsstellung zusammen mit der vertikalen Verschwenkachse 12 eine gemeinsame Vertikalebene bildet. Zur Begrenzung der Einfahr- und Ausfahrposition des Lichttragteils 29 sind Anschläge 37 vorgesehen, die gegen Anschläge des Reflektortragteils 7 in den jeweiligen Betriebspositionen anstoßen.

Somit sind die kontinuierlich einstellbaren Kurvenlichtpositionen einerseits und die Abblendlicht-Fernlicht-Einsteilung andererseits vollständig voneinander entkoppelt. Wie aus den Figuren 6a und b zu ersehen ist, schneiden in der Abblendlichtstellung das Ende 35 und in der Fernlichtstellung das Ende 36 die vertikale Verschwenkachse 12. Das Ende 36 ist über ein Kugelgelenk mit dem Stellstift 32 verbunden. Dadurch, dass die Durchbiegung des Federelementes 34 in den jeweiligen Endstellungen unterschiedlich orientiert ist, ist der Stellweg S3 des Stellstiftes 32 um die doppelte Durchbiegung des Federelementes 34 größer ausgebildet als der Verstellweg S5 des Lichttragteils 29. Bei einer Drehung des Reflektortragteils 7 um die Verschwenkachse 12 kann das Koppelelement 31 wie eine Pendelstütze der Kreisbahn des Federelementes 34 folgen und hält deren Durchbiegung konstant. Durch das Vorsehen einer kugelgelenkigen Anbindung des Endes 36 an den Stellstift 32 wird eine spannungsfreie räumliche Bewegung des Lichttragteils 29 ermöglicht.

Das Lichttragteil 29 ist kardanisch in dem Halteteil 7 angeordnet.

Alternativ kann der Scheinwerfer 1 auch nach dem Projektionsprinzip aufgebaut sein, wobei das Reflektortragteil zusätzlich mit einer nicht dargestellten Blende und einer Linse verbunden ist. Die Abblendlicht-Fernlichtfunktion wird in diesem Fall durch eine zweite bewegliche Blende ermöglicht. Die Blende besteht in diesem Fall aus einem feststehenden Blendenteil und einem beweglichen Blendenteil, das vorzugsweise zu dem feststehenden Blendenteil zwischen zwei Endlagen verschwenkbar ausgebildet ist, so dass durch Betätigung des beweglichen Blendenteils zwischen den beiden Lichtfunktionen hin- und hergeschaltet werden kann.

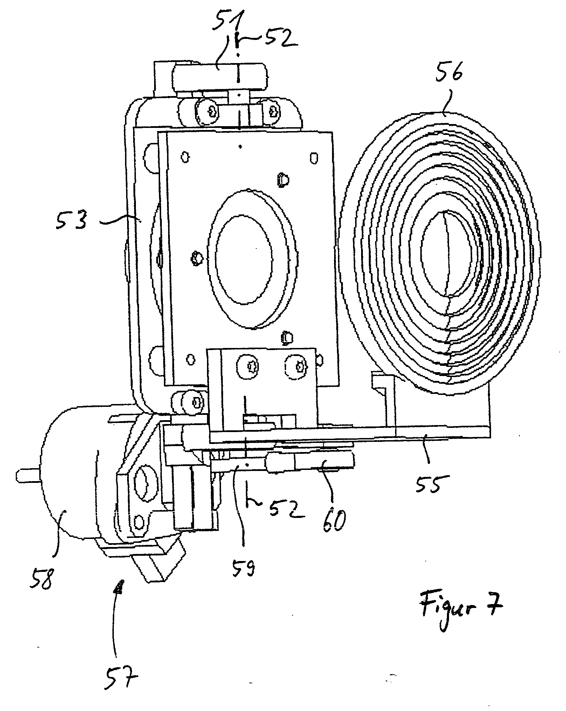

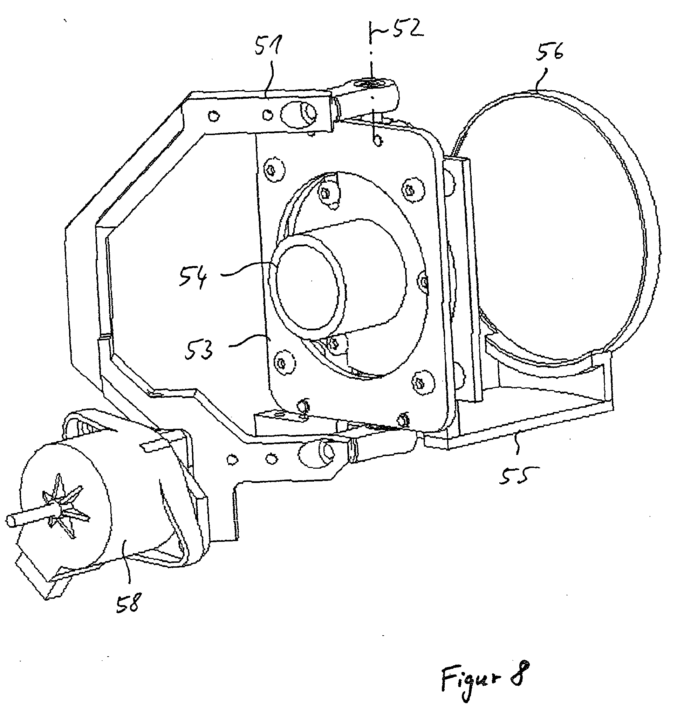

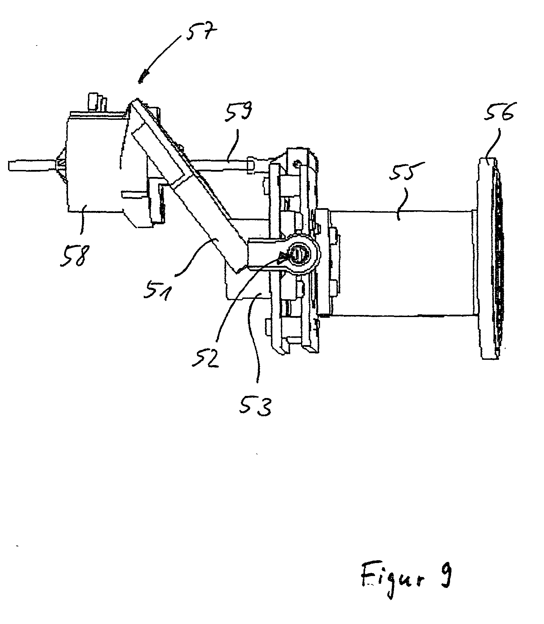

Nach einer alternativen Ausführungsform eines Scheinwerfers gemäß Figur 7 bis Figur 9 ist ein rahmenartiges Halteteil 51 vorgesehen, das mit einem nicht dargestellten Gehäuse des Scheinwerfers starr verbunden ist. An dem Halteteil 51 ist um eine Verschwenkachse 52 ein Schwenkteil 53 schwenkbar gelagert. Das Schwenkteil 53 weist eine zylinderförmige Lichtleiteraufnahme 54 auf, in die von hinten ein nicht dargestellter Lichtleiter eingesetzt werden kann. Der Lichtleiter ist vorzugsweise an einem dem Scheinwerfer abgewandten Ende mit einer Lichtquelle gekoppelt und dient als Übertragungsstrecke für das angekoppelte Licht zu dem Scheinwerfer. Vorzugsweise weist der Lichtleiter auf einer der Lichtaustrittsrichtung zugewandten Seite ein Lichtauskoppelelement auf, das eine vorgegebene Form zur Erzeugung einer symmetrischen oder asymmetrischen Lichtverteilung dient. Über einen dem Halteteil 51 vorgelagerten Abstandshalter 55, der starr mit dem Schwenkteil 53 verbunden ist, ist koaxial zu der Lichtleiteraufnahme 54 bzw. des Lichtauskoppelelment des Lichtleiters ein Optikelement 56 ausgerichtet.

Damit das Schwenkteil 53 mit dem Abstandshalter 55 und dem Optikelement 56 um die Verschwenkachse 52 relativ zu dem Halteteil 51 zur Erzeugung eines Kurvenlichtes verschenkt werden kann, ist eine Stelleinrichtung 57 vorgesehen, die im wesentlichen aus einem elektrischen Stellmotor 58 und einem Stößel 59 als Stellelement besteht. Das Optikelement 56 kann als Fresnellinse, als Freiflächenlinse oder als rotationssymmetisch konvex geformtes Lichtauskoppelelement geformt sein. Vorzugsweise wird der Lichtleiter in die Lichtleiteraufnahme 54 so weit von der Rückseite her eingesteckt, dass der Lichtleiter unmittelbar an dem Optikelement 56 zur Anlage kommt. Das Stößel 59 ist an einem Schwenkarm 60 des Schwenkteils 53 angelenkt unter Bildung eines Abstandes zu der Verschwenkachse 52. Der Schwenkarm 60 dient als Koppelelement und ist starr mit dem Schwenkteil 53 verbunden. Durch Betätigung des Stellmotors 58 wird der Stößel 59 ein- und ausgefahren, so dass eine entsprechende Verschwenkung des Schwenkteils 53 bewirkt wird.

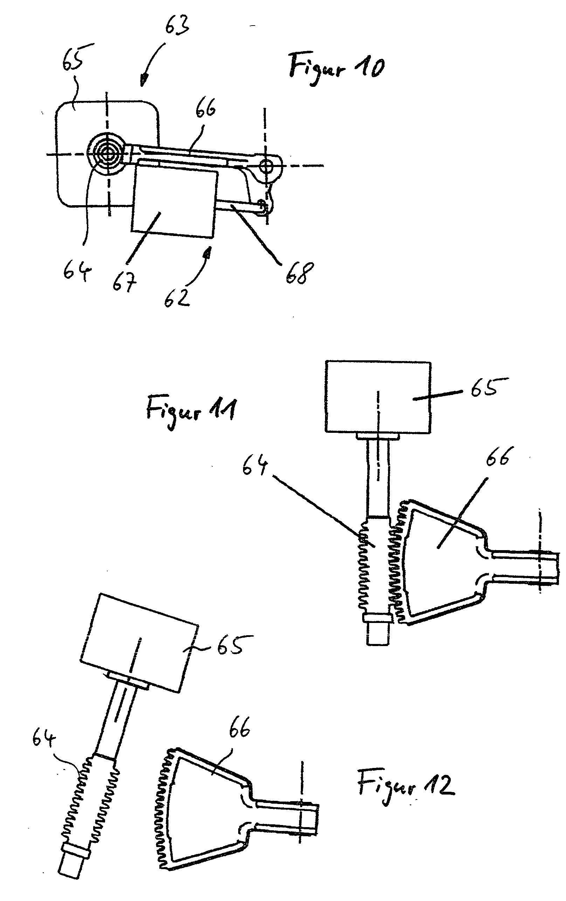

Nach einem weiteren Ausführungsbeispiel eines Scheinwerfers gemäß Figur 10 und Figur 11 kann im Unterschied zu dem vorhergehend beschriebenen Ausführungsbeispiel eine Stelleinrichtung 63 vorgesehen sein, die statt eines Stößels eine Schnecke 64 aufweist, die über einen elektrischen Stellmotor 65 in Drehung versetzbar ist. In einer Betriebsstellung gemäß Figur 11 steht die Schnecke 64 in Eingriff mit einem Koppelelement 66, das als Zahnsegment ausgebildet ist. Das Zahnsegment 66 ist starr mit dem Schwenkteil 53 verbunden.

Zusätzlich ist zum Auseinanderbewegen der Schnecke 64 und dem Zahnsegment 66 eine Trenneinrichtung 62 vorgesehen, die einen elektrisch betätigbaren Magneten (Elektromagnet 67) und eine Stößelstange 68 aufweist. Der Elektromagnet 67 ist über eine Stößelstange 68 mit dem Zahnsegment 66 gekoppelt wobei in einem Nichtbetriebszustand, in dem der Elektromagnet 67 nicht mit Strom beaufschlagt ist, eine mit der Stößelstange 68 gekoppelte nicht dargestellte Feder die Stößelstange 68 in einer rückgestellten Position hält, in der das Zahnradsegment 66 sich in der Nichteingriffsstellung zu der Schnecke 64 befindet. Im Betriebszustand ist der Elektromagnet 67 mit Strom beaufschlagt und hält die Stößelstange 68 entgegen einer Federkraft in einer Position, in der das Zahnsegment 66 in Eingriff mit der Schnecke 64 steht..

Befindet sich der Scheinwerfer in einem Nichtbetriebszustand, beispielsweise durch einen Defekt in der Zuleitung oder durch ein gesteuertes Abschalten, ist auch der Elektromagnet stromlos, so dass die Stößelstange 68 einfährt und damit das Zahnsegment 66 um eine Drehachse 69, die senkrecht zur Verschwenkachse 52 verläuft, in eine Nichteingriffsstellung zu der Schnecke 64 herausbewegt. Das Zahnsegment 66 und damit das Schwenkteil 53 ist nunmehr kräftefrei von der Stelleinrichtung 63 und kann damit durch geeignete Maßnahmen in eine mittlere Nullage verbracht werden. Alternativ kann das Zahnradsegment 66 in eine beliebige vorgegebene Winkelposition verbracht werden.

Alternativ kann auch die Schnecke 64 in einen Nichteingriffsstellung verbracht werden. Zu diesem Zweck müsste der mit dem Halteteil 51 verbundene Elektromagnet 67 durch geeignete Maßnahmen entgegen der Richtung des Zahnsegmentes 66 verschwenkt werden.

Nach einer bevorzugten Ausführungsform weist die Trenneinrichtung 62 statt des Elektromagneten 67 einen elektrischen Stellmotor auf, der über eine elektromagnetische Kupplung mit der Stößelstange 68 verbunden ist. In Abhängigkeit von dem Vorliegen von Stromzufuhr kann somit der entsprechende Schaltzustand eingestellt werden. Alternativ kann auch eine Reibkupplung vorgesehen sein.

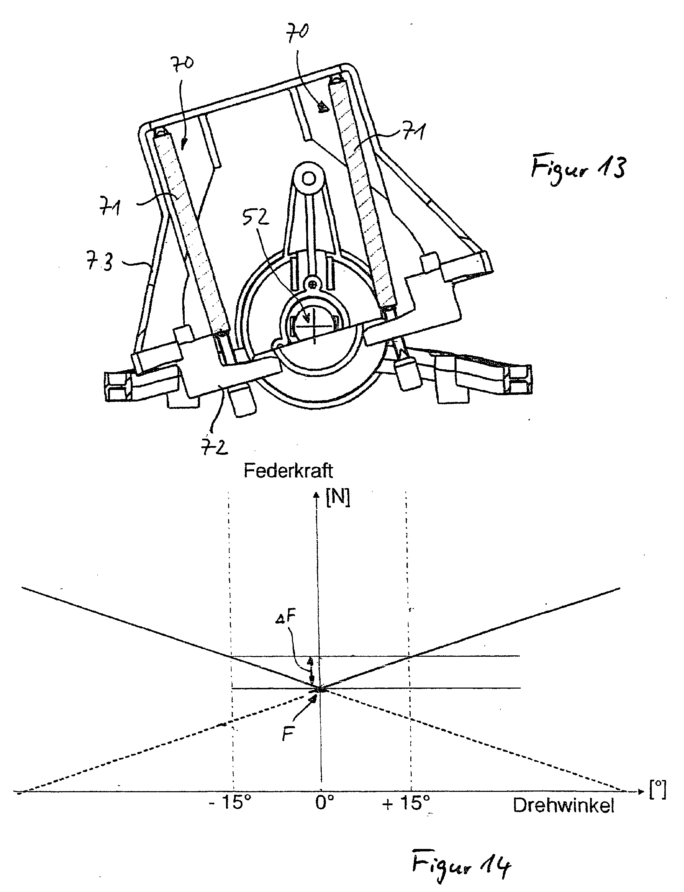

Zum Verbringen der gemäß Figur 7 bis 12 dargestellten Scheinwerfer kann eine Zentrierfedereinrichtung 70 gemäß Figur 13 vorgesehen sein. Die Zentrierfedereinrichtung 70 besteht aus zwei gleichartigen Zentrierfederelementen 71, die im wesentlichen senkrecht zur Verschwenkachse 52 und zu gegenüberliegenden Seiten derselben angeordnet sind. Die Enden der Zentrierfederelemente 71 sind jeweils mit einem Schwenkteil 72, der beispielsweise einen Reflektor tragen kann, einerseits und mit einem Halteteil 73 andererseits gekoppelt. Wie aus Figur 14 zu ersehen ist, sind die Zentrierfederelemente 71 um eine vorgegebene Federkraft F vorgespannt. Hierdurch kann die Federkennlinie relativ flach ausgebildet sein, so dass in einem Drehwinkelbereich von +/-15 Grad lediglich eine Federkraftdifferenz ΔF auftritt. Hierdurch kann eine relativ gleichbleibende Rückstellkraft in den unterschiedlichen Schwenkwinkelpositionen für das Kurvenlicht erzeugt werden. Dadurch, dass beide Zentrierfederelemente 71 vorgespannt sind, ist immer nur ein Zentrierfederelement 71 bei einer Auslenkung des Schwenkteils 53 wirksam, während das andere Zentrierfederelement 71 mit geringerer betragsmäßiger Federkraft der Rückstellkraft entgegenwirkt, siehe gestrichelte Kennlinie in Figur 14. Bei jeder Auslenkung des Schwenkteils 53 um die Nullage erfolgt eine Gesamtrückstellkraft, die der Differenz für den entsprechenden Drehwinkel zwischen der durchgezogenen Kennlinie und der gestrichelten Kennlinie entspricht.

Die Zentrierfederelemente 71 sind in einem gleichen Abstand zu der Verschwenkachse 52 angeordnet und weisen jeweils eine Länge auf, die größer ist als der doppelte Abstand jedes Zentrierfederelementes 71 zu der Verschwenkachse 52. Die Zentrierfederelemente können als Zug-, Druck- oder Schenkelfedern ausgebildet sein.

Der Scheinwerfer kann von einem schalenförmigen Reflektor mit Lichtquelle einem Projektionsmodul mit Reflektor, Lichtquelle, Blende und Linse oder einem mit einem flexiblen Lichtleiter gekoppelten Optikelement gebildet sein.

## Patentansprüche

1. Scheinwerfer für Fahrzeuge mit einem Halteteil und einem um eine vertikale Verschwenkachse zu demselben verschwenkbaren Schwenkteil, das in einem zentralen Bereich ein Lichtelement aufweist, **dadurch gekennzeichnet, dass** dem Halteteil (51) eine Stelleinrichtung (57, 63) mit einem Stellelement (59, 64) zugeordnet ist, das auf eine Koppelelement (60, 66) des Schwenkteils (53) einwirkt zur Verstellung desselben um die Verschwenkachse (52), und dass eine Zentrierfedereinrichtung (72) vorgesehen ist, derart, dass in einem Nichtbetriebszustand das Schwenkteil (53) selbsttätig in eine vorgegebene Lage zurückbewegbar ist.

2. Scheinwerfer nach Anspruch 1, **dadurch gekennzeichnet, dass** die Zentrierfedereinrichtung (70) mindestens zwei Zentrierfederelemente (71) aufweist, die sich im wesentlichen senkrecht zu der Verschwenkachse (52) und auf gegenüberliegenden Seiten derselben zwischen dem Halteteil (51) und dem Schwenkteil (53) erstrecken, wobei die Zentrierfederelemente (71) mit einer Vorspannung montiert werden, so dass das Schwenkteil (53) in dem Nichtbetriebszustand stets in die vorgegebene Nullage bewegt wird.

3. Scheinwerfer nach Anspruch 1 oder 2, **dadurch gekennzeichnet, dass** die Zentrierfederelemente (71) um den gleichen Betrag und in gleicher Richtung vorgespannt sind.

4. Scheinwerfer nach einem der Ansprüche 1 bis 3, **dadurch gekennzeichnet, dass** die Zentrierfederelemente (71) in einem gleichen Abstand zu der Verschwenkachse (52) angeordnet sind.

5. Scheinwerfer nach einem der Ansprüche 1 bis 4, **dadurch gekennzeichnet, dass** die Zentrierfederelemente (71) jeweils eine Länge aufweisen, die größer ist als der doppelte Abstand jedes Zentrierfederelementes (71) zu der Verschwenkachse (52).

6. Scheinwerfer nach einem der Ansprüche 1 bis 5, **dadurch gekennzeichnet, dass** die Zentrierfederelemente als Druckfeder oder als Zugfeder oder als Schenkelfeder oder als Blattfeder ausgebildet sind.

7. Scheinwerfer nach einem der Ansprüche 1 bis 6, **dadurch gekennzeichnet, dass** das Stellelement (59) der Stelleinrichtung (57) senkrecht zu der Verschwenkachse (52) orientiert ist.

8. Scheinwerfer nach einem der Ansprüche 1 bis 7, **dadurch gekennzeichnet, dass** die Stelleinrichtung (57, 63) einen elektrischen Stellmotor (58) umfasst, mittels dessen das Stellelement (59) senkrecht zur Verschwenkachse (52) und beabstandet zu derselben bewegbar ist.

9. Scheinwerfer nach einem der Ansprüche 1 bis 8, **dadurch gekennzeichnet, dass** das Stellelement (64) und das Koppelelement (66) jeweils eine Verzahnung aufweisen, mittels derer sie zumindest in dem Betriebszustand in Eingriff stehen.

10. Scheinwerfer nach einem der Ansprüche 1 bis 9, **dadurch gekennzeichnet, dass** das Koppelelement als ein fächerförmiges Zahnsegment (66) ausgebildet ist, das an einem Außenumfang die Verzahnung aufweist.

11. Scheinwerfer nach einem der Ansprüche 1 bis 10, **dadurch gekennzeichnet, dass** die Stelleinrichtung (63) Mittel umfasst, so dass das Stellelement (64) und das Koppelelement (66) in einem Nichtbetriebszustand außer Eingriff stehen.

12. Scheinwerfer nach einem der Ansprüche 1 bis 11, **dadurch gekennzeichnet, dass** auf das Stellelement (64) und/oder das Koppelelement (66) eine Trenneinrichtung (62) derart einwirkt, dass im stromlosen Nichtbetriebszustand das Stellelement (64) und/oder das Koppelelement (66) voneinander wegbewegt werden.

13. Scheinwerfer nach einem der Ansprüche 1 bis 12, **dadurch gekennzeichnet, dass** die Trenneinrichtung (62) einen Elektromagneten (67) umfasst, der mittels einer Stößelstange (68) auf das Schwenkteil (53) einwirkt.

14. Scheinwerfer nach einem der Ansprüche 1 bis 12, **dadurch gekennzeichnet, dass** die Trenneinrichtung (62) einen Elektromotor umfasst, der über eine elektromagnetische Kupplung mit einer Stößelstange (68) verbunden ist, die auf das Schwenkteil (53) einwirkt.

15. Scheinwerfer nach Anspruch 1, **dadurch gekennzeichnet, dass** das Schwenkteil einen Reflektor (2) umfasst, der über ein starr mit demselben verbundenes, quer zu der vertikalen Verschwenkachse (12) abragendes Bogenelement (8) mit einer parallel zu der vertikalen Verschwenkachse (12) orientierten Welle (22) der Stelleinrichtung (4) in Eingriff steht, und dass der Reflektor (2) durch Kopplung mittels eines vorgespannten Zentrierfederelementes (16) drehbar in Bezug zu dem Halteteil gelagert ist.

16. Scheinwerfer nach Anspruch 15, **dadurch gekennzeichnet, dass** sich das Bogenelement (8) von einem der vertikalen Verschwenkachse (12) nahen Bereich sektorförmig im Wesentlichen in Lichtabstrahlrichtung (5) erstreckt, wobei ein von der vertikalen Verschwenkachse (12) beabstandeter Bogenrand (9) mit einer Verzahnung (10) versehen ist.

17. Scheinwerfer nach Anspruch 15 oder 16, **dadurch gekennzeichnet, dass** das Zentrierfederelement (16) als eine sich quer zu der vertikalen Verschwenkachse (12) erstreckende Blattfeder ausgebildet ist, deren Enden (17) an zwei parallel zu der vertikalen Verschwenkachse (12) verlaufende Andruckstege (18) des Halteteils (13) einerseits und deren mittlerer Abschnitt an einem Reflektorfortsatz (15) des Reflektors (2) andererseits zur Anlage kommt.

18. Scheinwerfer nach einem der Ansprüche 15 bis 17, **dadurch gekennzeichnet, dass** die Stelleinrichtung (4) eine Antriebseinheit (20) mit einem Schrittmotor (21) aufweist, dessen Antriebswelle {22) mit dem Bogenrand (9) des Bogenelementes (9) in Eingriff steht.

19. Scheinwerfer nach einem der Ansprüche 15 bis 18, **dadurch gekennzeichnet, dass** die Lichtquelle (3) an einem Lichttragteil (29) gehalten ist, das um eine horizontale Achse (28) verschwenkbar zu dem Halteteil (13) angeordnet ist zur Bildung von mindestens zwei Lichtfunktionen, wobei die horizontale Achse (28) die vertikale Verschwenkachse (12) schneidet, und dass der Reflektor (2) im wesentlichen paraboloidförmig ausgebildet ist.

20. Scheinwerfer nach einem der Ansprüche 15 bis 19, **dadurch gekennzeichnet, dass** das Lichttragteil (29) derart über ein Koppelelement (31) mit einem axial beweglichen Stellstift (32) einer weiteren Stelleinrichtung (33) gekoppelt ist, dass in einer Einfuhrposition des Stellstiftes (32) ein dem Stellstift (32) abgewandtes Ende (35) des Koppelelementes (31) und in einer Ausfahrposition des Stellstiftes (32) ein dem Stellstift (32) zugewandtes Ende (36) des Koppelelementes (31) auf der vertikalen Verschwenkachse (12) angeordnet ist.

21. Scheinwerfer nach einem der Ansprüche 15 bis 20, **dadurch gekennzeichnet, dass** das dem Stellstift (32) zugewandte Ende (36) gelenkig mit dem Stellstift (32) verbunden ist.

22. Scheinwerfer nach einem der Ansprüche 15 bis 21, **dadurch gekennzeichnet, dass** das dem Stellstift (32) abgewandte Ende (35) des Koppelelementes (31) klammerartig ausgebildet ist und mit einem sich parallel zur horizontalen Achse (28) erstreckenden vorgespannten Federelement (34) des Lichttragteils (29) durch eine vertikale Linienberührung verbunden ist.

23. Scheinwerfer nach einem der Ansprüche 15 bis 22, **dadurch gekennzeichnet, dass** das Halteteil (13) rahmenartig ausgebildet ist, wobei es das Lichttragteil (29) und ein Reflektortragteil (7) des Reflektors (2) umschließt.

24. Scheinwerfer nach einem der Ansprüche 15 bis 23, **dadurch gekennzeichnet, dass** das Reflektortragteil (7) und/oder das Lichttragteil (29) Anschläge (37) aufweisen, so dass das Reflektortragteil (7) und das Lichttragteil (29) in den jeweiligen Lichtfunktions-Betriebspositionen unmittelbar aneinanderstoßen.

25. Scheinwerfer nach einem der Ansprüche 15 bis 18, **dadurch gekennzeichnet, dass** das Reflektortragteil (7) fest mit einer Blende und einer Linse verbunden ist, wobei der Reflektor ellipsoidförmig ausgebildet ist.

26. Scheinwerfer nach Anspruch 25, **dadurch gekennzeichnet, dass** die Blende ein feststehendes Blendenteil und ein bewegliches Blendenteil aufweist.
